# EUROPEAN PATENT SPECIFICATION

(11) **EP 1 379 350 B1**
(45) Date of publication and mention of the grant of the patent: **20.12.2006**
(21) Application number: 02704988.1
(22) Date of filing: 19.03.2002
(51) Int. Cl.: B23D 36/00, B21D 7/08

(54) **METHOD AND APPARATUS FOR CUTTING A METAL SHEET IN A ROLL FORMING EQUIPMENT OR PROCESS**
VERFAHREN UND VORRICHTUNG ZUM SCHNEIDEN EINES METALLBANDES IN EINER ROLLFORM- ANLAGE ODER BEI EINEM ROLLFORM-PROZESS
PROCEDE ET APPAREIL DE DECOUPE D'UNE FEUILLE METALLIQUE DANS UNE INSTALLATION OU UN PROCESSUS DE PROFILAGE

(30) Priority: 16.03.2001 GR 2001100135
(43) Date of publication of application: 14.01.2004
(73) Proprietor: Gefiropoulos, Stavros, 166 73 Voula Attikis (GR)
(72) Inventor: Gefiropoulos, Stavros, 166 73 Voula Attikis (GR)
(86) International application number: PCT/GR2002/000018
(87) International publication number: WO 2002/074477

(56) References cited:
- EP-A- 0 001 565
- DE-A- 2 654 866
- DE-A- 4 013 625
- GB-A- 971 236
- US-A- 5 142 894

## Description

The invention relates to a metal sheet roll forming method according to the preamble of claim 2 and to an apparatus according to the preamble of claim 1 for producing metal channels and studs which are subsequently used to build the frame structure whereupon are mounted gypsum board panels to form a partition wall.

The metal wall channels and studs are made in a generally "U or C-shaped" transverse cross section so as to have a longitudinally extending base and a pair of longitudinally extending side flanges, wherein said base and/or flanges are provided with a plurality of longitudinally spaced ribs and apertures for reinforcing and functional purposes. Typical channels and studs for wall frame structures are by way of example disclosed in US-5,157,883, US-5,426,904, EP-0 146 666 and EP-0 046 299.

Forming of these metal wall channels and studs takes place in machinery which conventionally comprises a sequential arrangement of roll forming devices which receive a continuously running metal sheet web moving from an upstream location wherein it is flat to a downstream location wherein it has been formed to the desired U or C shaped transverse cross section and has incorporated necessary ribs and apertures.

Conventional metal sheet roll forming machinery comprises a cutting means for severing at variable lengths already formed metal studs at the output thereof. The cutting process is thus necessarily carried out with a cutting blade that has to move normally to the direction of the running metal sheet web and penetrate the sheet metal through the complex U or C section thereof, further including the aforementioned ribs and apertures. This cutting process of the prior art is implemented with an associated necessary substantial drop in the speed of the running metal sheet web at the output of the machinery and therefore becomes the critical step in the overall roll forming process which substantially affects the overall speed of the running web and the productivity of the machinery accordingly.

In order to overcome this critical delay factor in metal sheet roll forming machinery, it has been attempted to install the cutting blade onto a reciprocatingly moving carrier which follows during cutting the running metal sheet web. However further to the added complexity of such a solution, the cutting process continues to adversely effect the overall speed of the process, since one has to take into account the time required for the cutting blade to return back to the position wherein cutting begins.

It must further be taken into account that the aforementioned cutting processes of the prior art necessitate employment of suitable dies corresponding to the varying desired section of studs to be produced and this further increases the cost of the overall roll forming process.

It is the object of the present invention to remove these drawbacks of the prior art by effecting the cutting step in a metal sheet roll forming machinery in a manner such that this step will no more constitute the critical factor affecting the overall speed of the running web and the productivity of the machinery accordingly.

Another object of the invention is to disclose an apparatus for implementing the cutting step in metal sheet roll forming machinery, the operation of which will no more become detrimental to the overall speed of the machinery.

The present invention is therefore concerned with a metal sheet roll forming method and apparatus for producing metal channels and studs, which are the necessary components of forming the metal frame structure whereupon are subsequently mounted gypsum board panels and the like to form partition walls, wherein the proposed method comprises a step during which the running metal sheet web is cut to the desired size at a location upstream of the roll forming arrangement, prior to initiation of roll forming process, whilst the running metal sheet web is still flat, whereby the subsequent roll forming process is not a process of roll forming a continuous running metal sheet web any more, but a process of roll forming a metal sheet web: already cut to size.

DE-4013625 discloses an apparatus and method for fly cutting through rotary blades of a metal sheet web, however such apparatus and method relates to a cutting process only and not a cutting process being part of a metal sheet roll forming apparatus and proposes successive accelerated and decelerated strokes of the running metal sheet web to effect the cutting operation that is unacceptable for continuously running metal sheet web in a roll forming process. Further US-5,142,894 discloses a method and apparatus for roll forming three-dimensional metal parts with complex shapes. However, also in US-5,142,894 the cutting process is carried out independently in a cutting arrangement prior to introduction and appropriately mounting of metal blanks cut therein into main roll forming apparatus. Hence neither DE-4013625 or US-5,142,894 refers to a cutting process for a continuously running metal sheet web in roll forming equipment.

Additionally, the method of the invention proposes a step of data input prior to operation of cutting and subsequent roll forming process and of measurement and adjustment of the cutting means to the speed of the running metal sheet web for cutting at the desired lengths the running metal sheet web.

Accordingly, the present invention proposes a cutting means installed at a location upstream of the roll forming part of the machinery, wherein the running metal sheet web is still flat, said cutting means comprising a pair of rolls, each one of said rolls being provided with a linear cutting blade longitudinally extending at the surface thereof, wherein one of said rolls is mounted above the surface of the running metal sheet web and the other one of said rolls is mounted symmetrically below the surface of the running metal sheet web and wherein cutting of the metal sheet web at the desired length is carried out by interaction of the linear cutting blades of the two rolls above and below the surface of the running web as the latter passes through the gap in between the linear cutting blades of the two rolls.

The apparatus of the invention is additionally equipped with means for data input and monitoring the speed of the running metal sheet web and dynamically adjusting the speed of rotation of the cutting rolls to that of the running metal sheet web.

It is expected that employment of the method and apparatus of the present invention will enhance the productivity and speed of sheet metal roll forming machinery from a maximum obtainable speed of 60 m/min in the conventional apparatuses of the prior art to speeds of the order of 200 m/min, such maximum being determined no more by the speed of the cutting process, but by the speed of stacking formed sheet metal portions at the output of the apparatus.

### BRIEF DESCRIPTION OF THE DRAWINGS

The invention will be made apparent to those skilled in the art by reference to the accompanying drawings, in which:

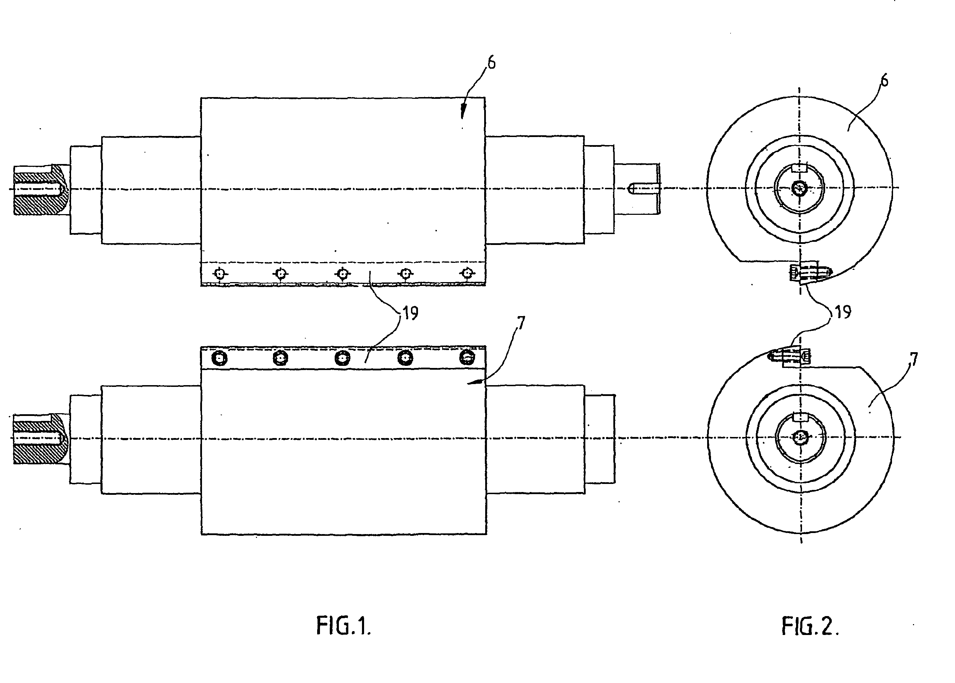

Figs. 1 and 2 present a frontal and side view respectively of the pair of rotary cutting rolls with the linear cutting blades.
Figs. 3 and 4 show a side and a cross sectional view of the frame upon which are mounted the rolls with the linear cutting blades.
Figs 5-8 show frontal and cross sectional views of various items employed in the assembly of the pair of rotary cutting rolls.
Figs. 9 and 9a show a diagrammatic and side view of the machinery including the arrangement of rotary cutting rolls.

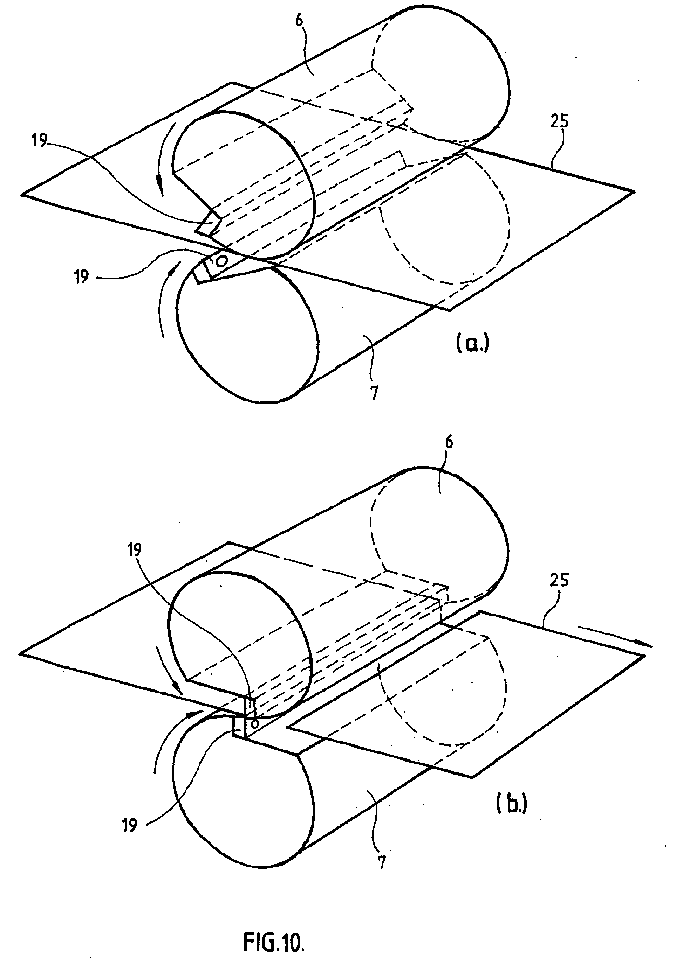

Fig. 10 shows a perspective view of a detail of the cutting being implemented as the sheet metal passes through the gap in between the cutting rolls of the apparatus of the invention.

### DESCRIPTION OF PREFERRED EMBODIMENTS

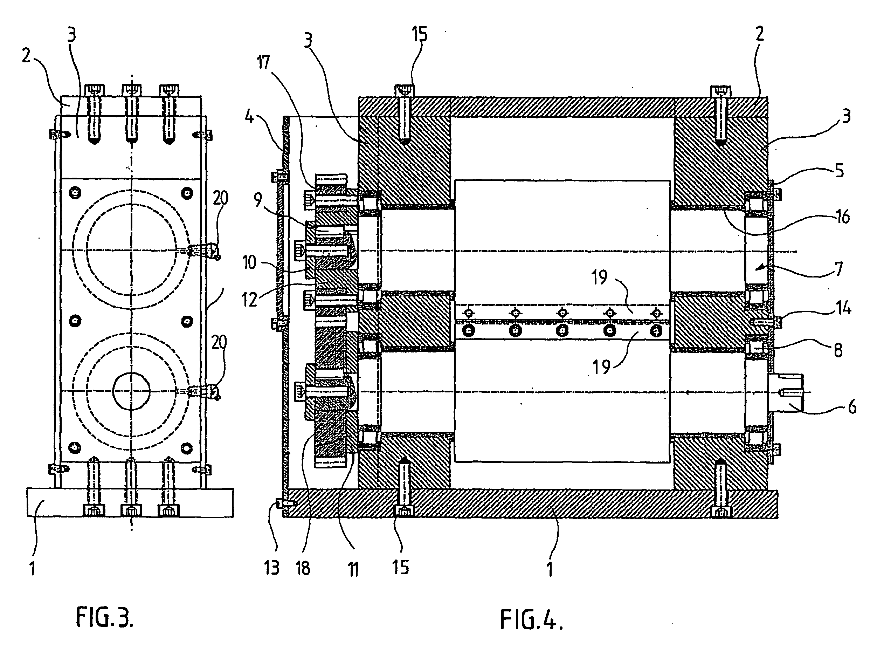

In accordance with the illustrative, preferred embodiment of the invention depicted in the accompanying drawings, the arrangement which is proposed to perform the step of cutting to length the metal sheet web 25 is housed within a substantially rectangular framework shown in Figs. 3 and 4 comprising parallel basements 1, 2 interconnected via bolts 15 to a pair of parallel side walls 3.

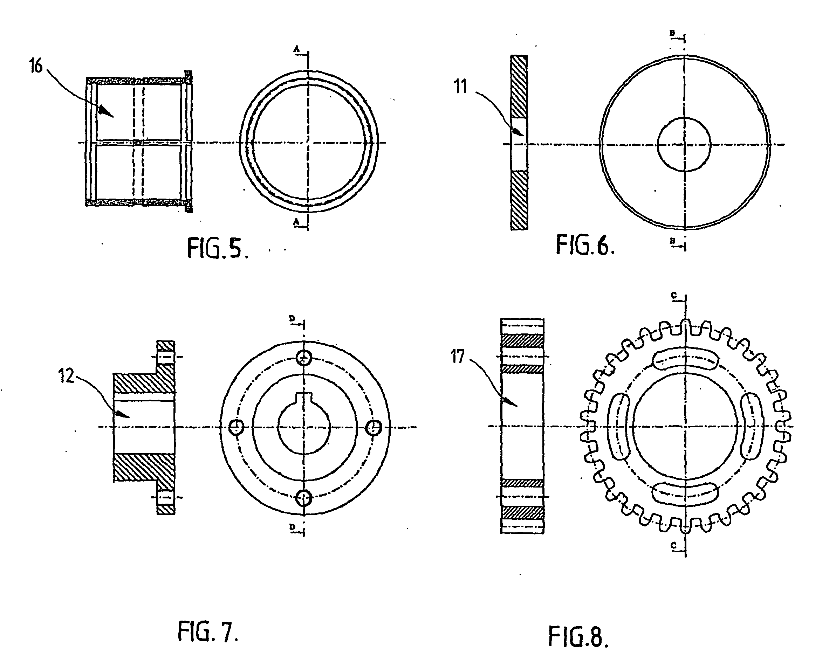

The cutting arrangement comprises a pair of rolls 6, 7 each one of which is equipped with a longitudinally extending linear cutting blade 19. Each one of the pair of rolls 6, 7 is rotatably mounted in bearings 8 onto the lateral walls 3 with the interposition of rings 16, an illustrative view of which appears in Fig. 5. A pair of mutually engaged gears 17, 18, as illustratively depicted in Fig. 8 are correspondingly connected at projecting ends of the central axial shafts of rolls 7 and 6 respectively at one side of the rectangular housing, wherein by means of these mutually engaged gears 17, 18, the rolls 6 and 7 are rotated in accurate synchronisation. Stopper flanges 10 are mounted externally of the gears 17, 18, whereas a spacer element 11 (Fig. 6) and a step controlling element 12 (Fig. 7) is provided in association with gear 18 and gear 17 respectively. The housing is eventually closed with side covers 4 and 5 fixedly mounted by means of the bolts 13 and 14 respectively.

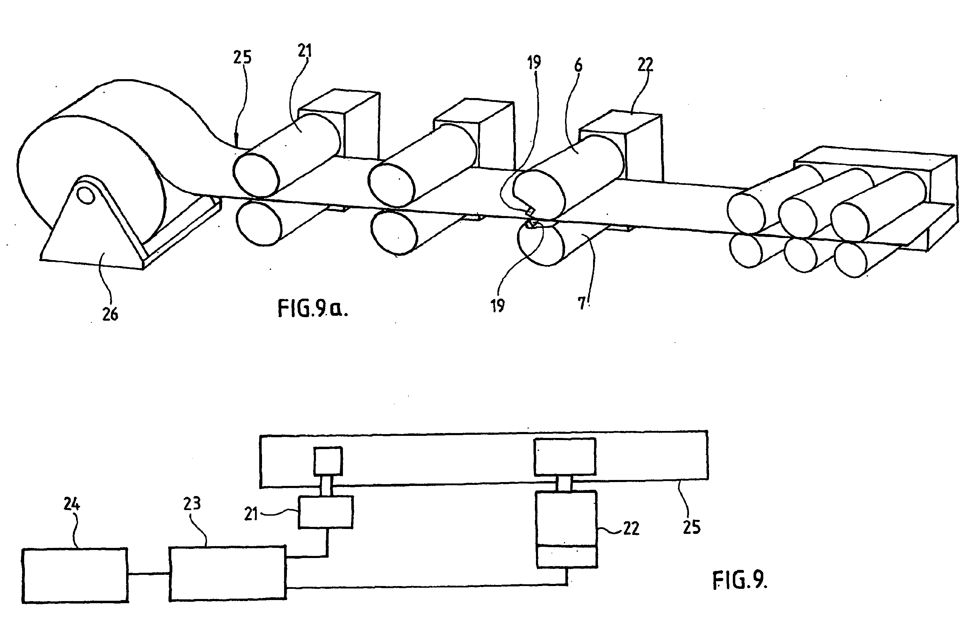

As shown in Figs. 9 and 9a the cutting arrangement of the metal sheet roll forming apparatus of the invention further comprises:
- a data input terminal 24 wherein are introduced the parameters for the cutting process, such parameters including the desired length of metal sheet portions;
- an encoder means 21 for the measurement of the speed of running sheet metal web 25 and for monitoring the length of the sheet metal web 25 passing therefrom;
- a servomotor arrangement 22 for the rotation of the pair of cutting rolls 6, 7, and
- a central processing unit 23, which provides necessary control and synchronisation of the cutting process.

The method of sheet metal roll forming of the present invention with a scope to producing metal channels and studs which are subsequently used to build the frame structure whereupon are mounted gypsum board panels to form a partition wall comprises a process of cutting to size the sheet metal web which is advantageously implemented prior to sheet metal roll forming and comprises the following steps:
- a first step during which the parameter of the desired length of sheet metal portions is entered in the data input terminal 24;
- a second step during which the sheet metal running web unwinding from the feeding drum 26 passes through the feeding roll arrangement wherein is located an encoder means 21, which passes to the central processing unit 23 the values resulting from the measurement of the speed of running sheet metal web 25 and from the monitoring the length of the sheet metal web 25 passing therefrom;
- a third step during which, after a predetermined percentage of the length into which the running sheet metal web has to be cut has passed through the above mentioned feeding roll arrangement, the central processing unit 23 activates the servomotor 22, which initiates rotation in accurate synchronisation with the monitored speed of the running sheet metal web of the cutting rolls 6 and 7 bearing the linear cutting blades 19;
- a fourth step during which the cutting rolls perform simultaneously a rotation of a first predetermined arc length, said rotation being accurately synchronised to the speed of the running sheet metal web and resulting in bringing the linear cutting blades 19 mounted onto the cutting rolls 6 and 7 respectively at an interacting position above and below the running sheet metal web, whereby the latter is cut at the desired length and consequently the monitored value of the length of the sheet metal web 25 passing through the feeding roll arrangement wherein is located the encoder means 21 is adjusted to zero;
- a fifth step during which the servomotor 25 continues to rotate the two cutting rolls 6 and 7 through a second predetermined arc length so as to bring them at a ready to start initial position, whilst the central processing unit 23 begins collecting fresh information as to the speed of the running sheet metal web and the length of the same passing through the feeding roll arrangement with the encoder means 21. Subsequently the process continues with repetition of the above second till fifth steps until the required number of sheet metal portions of the desired length as monitored in the data input terminal 24 is obtained.

In accordance with a preferred embodiment of the invention the above mentioned predetermined percentage of the length into which the running sheet metal web has to be cut, which must have passed through the above mentioned feeding roll arrangement in order for the central processing unit 23 to activate the servomotor 22, thereby initiating rotation in accurate synchronisation with the monitored speed of the running sheet metal web of the cutting rolls 6 and 7 bearing the linear cutting blades 19 and performing the cutting operation, is of the order of 95% of the desired eventual length of the studs obtainable at the output of the sheet metal roll forming apparatus.

It should hereby be noted that the description of the invention was made with reference to illustrative embodiments, which are however not binding. Thus, any modification or amendment in reference to dimensions, configuration, materials used in the construction and assembly process are considered to be an inherent part of aims and goals of the invention as long as such modification does not extend beyond the scope of the claims.

## Claims

1. Apparatus for metal sheet roll forming of metal channels and studs which are subsequently used to build the frame structure whereupon are mounted gypsum board panels and the like to form partition walls, said apparatus comprising a sequential arrangement of roll forming devices which receive a continuously running sheet metal web (25) moving from an upstream location wherein it is flat when unwinding from a feeding drum (26) to a downstream location wherein it has been formed to a desired, typical for the intended metal channels and studs, U or C shaped transverse cross section with incorporated necessary ribs and apertures, a cutting means for severing at variable lengths said metal sheet web (25) is located at said upstream location wherein the sheet metal web is flat, said cutting means comprising a pair of cutting rolls (6, 7), each one of said rolls being equipped with a longitudinally extending linear cutting blade (19), wherein cutting of the running sheet metal web (25) at the desired length is effected when the linear cutting blades (19) mounted onto said cutting rolls (6) and (7) respectively are, during a cutting operation, brought at an interacting position above and below the running sheet metal web (25) **characterised by** said rolls (6, 7) being connected through a pair of mutually engaged gears (17, 18) respectively so that they are rotated in accurate synchronisation, and wherein the means for controlling the cutting operation includes a data input terminal (24) wherein are introduced the parameters for the cutting process, said parameters including the desired length of metal sheet portions, an encoder means (21) at a feeding roll arrangement of the running sheet metal web (25) for the measurement of the speed of running sheet metal web (25) and for monitoring the length of the sheet metal web (25) passing therefrom, a central processing unit (23) adapted to receive from said encoder means (21) the values resulting from the measurement of the speed of running sheet metal web (25) and from the monitoring of the length of the sheet metal web (25) passing therefrom and a servomotor arrangement (22) activated by said central processing unit (23), said servomotor arrangement (22) initiating rotation of said cutting rolls (6, 7) in accurate synchronization with the monitored speed of the running sheet metal web (25) to effect cutting of the running sheet metal web (25) at the desired length.

2. Method for metal sheet roll forming of metal channels and studs which are subsequently used to build the frame structure whereupon are mounted gypsum board panels and the like to form partition walls, comprising the step of: severing at variable lengths a running metal sheet web (25) at an upstream location wherein the sheet metal web is flat, said method **characterised by**:
- a first step during which the parameter of the desired length of sheet metal portions is entered in the data input terminal (24);
- a second step during which a sheet metal running web (25) unwinding from a feeding drum (26) passes through a feeding roll arrangement wherein is located an encoder means (21), said encoder means (21) passing to a central processing unit (23) the values resulting from the measurement of the speed of said running sheet metal web (25) and from the monitoring of the length of the sheet metal web (25) passing therefrom;
- a third step during which, after a predetermined percentage of 95% of the desired eventual length of the sheet metal portions obtainable at the output of the sheet metal roll forming apparatus has passed through said feeding roll arrangement, said central processing unit (23) activates a servomotor (22), which initiates rotation, in accurate synchronisation with the monitored speed of said running sheet metal web (25), of a pair of rotary cutting rolls (6, 7), each one of said rotary cutting rolls (6, 7) bearing a linear cutting blade (19);
- a fourth step during which said rotary cutting tolls (6, 7) perform simultaneously a rotation, said rotation being accurately synchronised to the speed of the running sheet metal web (25) and resulting in bringing said linear cutting blades (19) mounted onto the cutting rolls (6) and (7) respectively at an interacting position above and below the running sheet metal web (25), whereby the latter is cut at the desired length and consequently the monitored value of the length of the sheet metal web (25) passing through the feeding roll arrangement wherein is located the encoder means (21) is adjusted to zero, and
- a fifth step during which said servomotor (25) continues to rotate said pair of cutting rolls (6, 7) so as to bring them at a ready to start initial position, whilst said central processing unit (23) begins collecting fresh information as to the speed of the running sheet metal web and the length of the same passing through said feeding roll arrangement with the encoder means (21) and whilst the cut to length sheet metal portion is fed to a sequential arrangement of roll forming devices located downstream of the location in which the process for severing at variable lengths said running metal sheet web (25) is carried out.

3. Method for metal sheet roll forming according to claim 2, wherein said predetermined percentage of the length into which the running sheet metal web (25) has to be cut, which must have passed through said feeding roll arrangement in order for said central processing unit (23) to activate said servomotor (22), thereby initiating rotation, in accurate synchronisation with the monitored speed of the running sheet metal web, of said cutting rolls (6) and (7) bearing the linear cutting blades (19) and performing the cutting operation, is of 95% of the desired eventual length of the sheet metal portions obtainable at the output of the sheet metal roll forming apparatus.

## Patentansprüche

1. Rollformvorrichtung mit einem Metallband für Metallkanale und Ständer, die weiterhin für die Anfertigung der Baugerüsten benutzt werden, auf denen Gibsbretterfollies und dergleichen Baustoffen eingesetzt werden, um Trennungswänder zu bilden, bestehend aus eine Mehrfachanordnung von Formrollen, die dauernd einen laufenden Metallband (25) aufnehmen, das sich von einer Aufwärtsposition bewegt, wobei dieses Band flach ist, wenn es sich von einem Zufuhrtrommel (26) zu einer Abwärtsposition auseinanderrollt, wo es in einer gewünschte Form querschnitts U oder C gestaltet wird, typisch für bezweckende Metallkanale und Ständer mit den notwendigen Neurosen und Öffnungen einverleibend, ein Schneidemittel für das Abschneiden des Metallbandes (25) in variablen Längen, das sich in einer Aufwärtsposition befindet, wo das Metallband flach ist, und das Schneidemittel aus einem Schneiderollpaar (6, 7) besteht, wo jede von den Rollen mit einer der Länge nach ausdehnbare Lineare Schneideklinge (19) ausgerüstet ist, wobei das Schneiden des laufenden Metallbandes (25) in gewünschter Länge erst möglich wird, wenn die Linearen Schneideklingen (19), die in den Schneiderollen (6) und (7) eingesetzt sind, während noch das Schneiden in Betrieb ist in einer Wechselwirkungposition oberhalb und unterhalb des laufenden Metallbandes (25) gebracht werden, **dadurch gekennzeichnet dass** die Rollen (6, 7) durch ein zusammeneigreifendes zahnförmiges Radpaar (17, 18) verbunden sind, so dass sie sich in genauer Synchronisierung umdrehen, und wobei das Kontrollmittel, das die Funktion des Schneidens bestimmt terminale Einführungsdaten (24) enthält, wo die Parameter für das Verfahren des Schneidens eingetragen werden, indem bei diesen Parametern wird vorgesehen: die gewünschte Länge der Metallbandteilen, ein Codemittel (1) in einer Zufuhrrolleanordnung des laufenden Metallbandes (25) für die Geschwindigkeitsmessung des laufenden Metallbandes (25) und für den Kontroll der Länge des Metallbandes, der durch dieses Codemittel durchlauft, eine Zentralbearbeitungseinheit (23), die so angepasst wird, um von dem Codemittel die Preise einnehmen zu können, die das Ergebniss der Geschwindigkeitmessung des laufenden Metallsbandes (25) und der Kontrolllänge des Metallbandes (25) sind, die das Codemittel durchlaufen, und eine Servomotoranordnung (22) aktivierend von diesen Zentralbearbeitungseinheit (23), wo diese Servomotoranordnung (22) die Schneideklinge (6, 7) umdrehend in genaue Synchronisierung mit der registrierenden Geschwindigkeit des laufenden Metallbandes (25) in Gang setzt, um das Schneiden des laufenden Metallbandes (25) in der gewünschten Länge zu ermöglichen.

2. Rollformverfassung mit Metallband für Metallkanale und Ständer, die weiterhin für die Anfertigung der Baugerüsten benutzt werden, auf denen Gibsbretternfollies und dergleichen Baustoffen eingesetzt werden, um Trennungswänder zu bilden, bestehend, aus eine Schneidestufe in variablen Längen eines laufenden Metallbandes (25) in einer Aufwärtsposition, wo dieses Metallband flach ist, wobei diese Verfassung **dadurch gekennzeichnet, dass** es
- eine erste Stufe während der, der Parameter der gewünschten Länge der Metallbandteilen beim terminal der Einführungsdaten (24) eingetragen wird, vorgesehen ist;
- eine zweite Stufe, während der ein laufendes Metallband (25), das sich von einem Zufuhrtrommel (26) auseinanderrollt, durchlauft eine Zufuhrrolleanordnung, wo sich ein Codemittel (21) befindet, welches Codemittel (21) die Preise, die von der Geschwindigkeitsmessung des laufenden Metallbandes (25) und der Kontrolllänge des Metallbandes (25), die diese Zufuhrrolleanordnung durchläuft, vorkommen, in eine Zentralbearbeitungseinheit leitet, vorgesehen ist;
- eine dritte Stufe, während der, nachdem die vorherig festgesetzte 95% Prozente der gewünschten Endlängen übergegangen sind, die am Ausgang der Rollform-Vorrichtung der Metallbandrollen Metallbandteile von der Zufuhrrolleanordnung aufgenommen werden, die Zentralbearbeitungseinheit (23) aktiviert einen Servomotor (22), welcher eine Umdrehung in genaue Synchronisierung mit der registrierenden Geschwindigkeit des laufenden Metallbandes (25) in Gang setzt, ein Umdrehungsschneiderollpaar (6, 7), wo jede von den Umdrehungsschneiderollen (6, 7) eine lineare Schneideklinge (19) trägt, vorgesehen ist;
- eine vierte Stufe, während der, die Umdrehungsschneiderollen (6, 7) eine gleichzeitige Umdrehung durchführen, welche Umdrehung genau mit der Geschwindigkeit des laufenden Metallbandes (25) synchronisiert ist, so dass die lineare Schneideklinge (19), die in den Schneiderollen (6) und (7)eingesetzt sind in einer Wechselwirkungsposition oberhalb und unterhalb des laufenden Metallbandes (25) kommen, so dass das letzte in der gewünschten Länge abgeschnitten wird und aufgrund dessen (des Schneidens)die kontrollierte Preislänge des Metallbandes (25), die durch die Zufuhrrolleanordnung durchläuft, wo sich das Codemittel (21) befindet, auf Null gestellt wird, vorgesehen ist, und
- eine fünfte Stufe während der, der Servomotor (22) das Schneiderollpaar (6, 7) weiter umdreht, so dass er sie in eine Anfangsposition bereit haltet, um sie wieder Ingang zu setzen, und dabei die Zentralbearbeitungseinheit (23) sammelt neue Informationen betreffend der Geschwindigkeit des laufenden Metallbandes und der Länge desselben, die durch diese Zufuhrrolleanordnung und dem Codemittel (21) durchlauft, indem der abgeschnittene in gewünschte Länge Metallbandteil in eine Mehrfachanordnung der Formrollen geleitet wird, die sich in solche Position befindet, die abwärts von dem des Schneideverfahrens ist, bei der das Schneideverfahren in variablen Längen des laufenden Metallbandes (25) durchgeführt wird, vorgesehen ist.

3. Formverfassung mit Metallbandrollen nach Anspruch 2, wo das vorherig festgesetztes Prozent der Länge nach dem das laufende Metallband (25)abgeschnitten werden muss, welches durch die Zufuhrrolleanordnung durchlaufen muss, damit die Zentralbearbeitungseinheit (23) den Servomotor (22) zu Aktivierung bringt, und auf diese weise die Umdrehung Ingang setzen, in eine genaue Synchronisierung mit der kontrollierenden Länge des laufenden Metallbandes, der Schneiderollen (6) und (7), die die linearen Schneideklingen (19) tragen und das Schneideverfahren durchführen, ist das 95% der gewuenschten Endlaenge der Metallbandteilen, die am Ausgang der Rollformvorrichtung aufgenommen werden.

## Revendications

1. Appareil de profilage d'une feuille métallique pour canaux et goujons en métal qui sont séquentiellement utilisés pour la fabrication de l'ossature de la structure sur laquelle sont montés des panneaux en gypse et matériaux similaires pour former des panneaux repartis, ledit appareil comportant un arrangement de dispositifs séquentiels de profilage, lesquels dispositifs reçoivent une courroie en feuille métallique amovible (25) se déplaçant d'une position supérieure où elle est aplanie lorsqu'elle se déploie à partir d'un tambour d'alimentation (26) vers une position inférieure sur laquelle elle se forme d'une manière désirée, une configuration d'une section latérale en forme d'U ou C avec des saillies et des ouvertures nécessairement incorporés, appropriée pour lesdits canaux et goujons en métal, un moyen de découpe pour découper sur des longueurs variables de ladite courroie en feuille métallique amovible (25) située sur ladite position supérieure où la courroie en feuille métallique est aplanie, où ledit moyen de découpe comporte une paire de cylindres de découpe (6, 7), chacun desdits dispositifs de profilage étant équipés d'une lame linéaire de découpe longitudinalement étendue (19), où la découpe de la courroie en feuille métallique amovible (25) est effectuée sur une longueur désirée lorsque les lames linéaires de découpe (19) qui sont montées sur lesdits cylindres de découpe (6) et (7) se joignent respectivement, pendant une opération de découpe, dans une position interactive l'un au-dessus et l'autre au-dessous de la courroie en feuille métallique amovible (25), cet appareil **caractérisé en ce que** lesdits cylindres (6, 7) étant respectivement reliés par une paire de roues dentées (17, 18) qui s'accouplent de sorte qu'elles tournent dans une synchronisation précise, et où le moyen de contrôle de l'opération de découpe comprend un terminal d'entrée des données (24) où sont introduits les paramètres pour le processus de découpe, où dans lesdits paramètres est comprise la longueur désirée des portions de la courroie en feuille métallique, un encodeur (21) sur le tambour d'alimentation de la courroie en feuille métallique amovible (25) pour mesurer la vitesse de la courroie en feuille métallique amovible (25) et pour contrôler la longueur de la courroie en feuille métallique (25) qui passe à travers l'encodeur, une unité centrale de traitement (23) adaptée pour recevoir à partir dudit encodeur (21) les valeurs résultant de la mesure de la vitesse de la courroie en feuille métallique amovible (25) et du contrôle de la longueur de la courroie en feuille métallique (25) qui traverse l'encodeur et un servomoteur (22) activé par ladite unité centrale de traitement (23), où ledit servomoteur (22) déclenche la rotation desdits cylindres de découpe (6, 7) dans une synchronisation précise avec la vitesse enregistrée de la courroie en feuille métallique amovible (25) pour effectuer la découpe de la courroie en feuille métallique amovible (25) à une longueur désirée.

2. Procédé de profilage d'une feuille métallique pour canaux et goujons en métal qui sont séquentiellement utilisés pour la construction de l'ossature de la structure sur laquelle sont montés des panneaux en gypse et matériaux similaires pour former des panneaux repartis, lequel procédé comprend une étape de découpe sur des longueurs variables d'une courroie en feuille métallique (25) sur la position supérieure où la courroie en feuille métallique est aplanie, où ledit procédé est **caractérisé par**:
- une première étape pendant laquelle le paramètre de la longueur désirée des portions de la courroie en feuille métallique est inséré dans le terminal d'entrée des données (24);
- une seconde étape pendant laquelle la courroie en feuille métallique amovible (25) laquelle se déploie d'un tambour d'alimentation (26) et traverse le dispositif du tambour d'alimentation où est situé un encodeur (21), lequel dit encodeur (21) transmet à une unité centrale de traitement (23) les valeurs résultant de la mesure de la vitesse de ladite courroie en feuille métallique amovible (25) et du contrôle de la longueur de la courroie en feuille métallique amovible (25) qui traverse le tambour d'alimentation;
- une troisième étape pendant laquelle, après qu'un pourcentage prédéterminé de 95% de l'éventuelle longueur désirée des portions de la feuille métallique qui doivent être obtenues à la sortie de l'appareil de profilage de la feuille métallique soit passé à travers ledit dispositif du tambour d'alimentation, ladite unité centrale de traitement (23) active un servomoteur (22), lequel déclenche la rotation, dans une synchronisation précise avec la vitesse enregistrée de ladite courroie en feuille métallique amovible (25), d'une paire de cylindres rotatifs de découpe (6, 7), chacun desdits cylindres rotatifs de découpe (6, 7) porte une lame linéaire de découpe (19);
- une quatrième étape pendant laquelle lesdits cylindres rotatifs de découpe (6, 7) effectuent simultanément une rotation, ladite rotation étant exactement synchronisée à la vitesse de la courroie en feuille métallique amovible (25) et ayant pour résultat de joindre lesdites lames linéaires de découpe (19) qui sont respectivement montées sur les cylindres rotatifs de découpe (6) et (7) sur une position interactive l'une au-dessus et l'autre au-dessous de la courroie en feuille métallique amovible (25), ainsi cette dernière est découpée selon la longueur désirée et par conséquent la remise à zéro de la valeur contrôlée de la longueur de la courroie en feuille métallique (25) qui traverse ledit dispositif du tambour d'alimentation dans lequel est situé l'encodeur (21), et
- une cinquième étape pendant laquelle ledit servomoteur (25) continue de faire tourner ladite paire des cylindres rotatifs de découpe (6, 7) afin de les porter dans une position initiale prêts à tourner, tandis que ladite unité centrale de traitement (23) déclenche la collecte de nouvelles informations relative à la vitesse de la courroie en feuille métallique amovible et la longueur de celle-ci qui passe à travers ledit dispositif du tambour d'alimentation avec l'encodeur (21) et tandis que la portion découpée de la courroie en feuille métallique à la longueur désirée est conduite vers un arrangement de dispositifs séquentiels de profilage qui est situé sur une position inférieure relative à la position sur laquelle s'effectue le processus de découpe sur des longueurs variables de la courroie en feuille métallique amovible (25).

3. Procédé de profilage d'une feuille métallique selon la revendication 2, où ledit pourcentage prédéterminé de la longueur sur lequel la courroie en feuille métallique amovible (25) doit être découpée, lequel pourcentage doit passer à travers ledit dispositif du tambour d'alimentation afin que ladite unité centrale de traitement (23) puisse activer ledit servomoteur (22), déclenchant de ce fait la rotation, dans une synchronisation précise avec la vitesse contrôlée de la courroie en feuille métallique amovible, desdits cylindres rotatifs de découpe (6) et (7) lesquels portent des lames linéaires de découpe (19) et effectuent l'opération de découpe, est de 95% de l'éventuelle longueur finale désirée des portions de la courroie en feuille métallique amovible obtenues à la sortie de l'appareil de profilage de la feuille métallique.
